# EUROPEAN PATENT APPLICATION

(11) **EP 2 133 770 A2**
(43) Date of publication of application: **16.12.2009**
(21) Application number: 08252928.0
(22) Date of filing: 03.09.2008
(51) Int. Cl.: G06F 1/26

(54) **Motherboard with additional voltage regulator module slot area and associated electronic module**

(30) Priority: 13.06.2008 TW 97122172
(71) Applicant: ACER INCORPORATED, Taipei Hsien 221 (TW)
(72) Inventor: Huang, I-Huei, Hsichih, Taipei Hsien 221 (TW)
(74) Representative: Pratt, David Martin

(57) **Abstract**

A motherboard includes a central processing unit (CPU) slot, a voltage regulator module (VRM), a VRM slot area, and a control unit. The VRM is electrically connected to the CPU slot and used for supplying a CPU installed inside the CPU slot with a first power. When a VRM card is inserted into the VRM slot area, the control unit electrically conducts the VRM slot area with the CPU slot so as to make the VRM card and the VRM together supply the CPU installed in the CPU slot with a second power. The second power is greater than the first power.

## Description

### BACKGROUND OF INVENTION

### 1. FIELD OF THE INVENTION

The present invention relates to a motherboard and an associated electronic module and more particularly to a motherboard with an additional voltage regulator module slot area and an associated electronic module.

### 2. DESCRIPTION OF THE PRIOR ART

Generally speaking, since the computer has powerful and various functions, the central processing unit (CPU) inside the computer must have a strong computation power so as to handle complicated and varied scheduling of system tasks. However, the loading of the CPU for different task scheduling may also be different, so the power consumption of the CPU changes with the loading of the CPU, that is, the power consumption of the CPU increases or decreases in an instant following the currently-performed task scheduling is changed. Facing this situation, the common power supply in the computer cannot provide real-time change of the supplied power for the CPU. Thus, the motherboard usually disposes a power supply module specially designed for the CPU. This special power supply module, composed of a pulse width modulation (PWM) driving circuit, MOS transistors, chokes, capacitors, etc., is called a voltage regulator module (VRM). The VRM can detect the voltage level request of the CPU by detecting a Voltage IDentificator (VID) signal issued by the CPU, search a predefined lookup table for the required voltage value corresponding to the VID signal, and then adjust the working voltage of the CPU. In this way, the normal operation of the CPU can be assured by avoiding the abrupt change of the voltage resulted from the sudden change of the current. The PWM driving circuit is used to convert the amplitude of an input voltage into a pulse signal, monitor the output status of the power circuit so as to make real-time correction, and control switches of the MOS transistors for current control. The chokes are used for power storage and rectification, that is, they temporarily store excess current when the current passes and release electric energy in the lack of current, thereby achieving the effect of current stabilization. The capacitors are used for power storage and filtering, that is, they can not only remove low frequency noises but also store the current so as to assure the stable power supply for the CPU.

In brief, the motherboard supplies the CPU with proper powers by using the above VRM. Since the power consumption of the CPU is increasingly large in nowadays, the motherboard is usually disposed with a multi-phase VRM including multiple groups of transistors, chokes and capacitors which can averagely share a high current resulted from the high power consumption, thereby increasing the life span and security of the motherboard. This design of using the VRM with a high phase number can quickly react to an abrupt loading change of the CPU so as to effectively enhance the operation stability of the motherboard. Thus, the VRM on the motherboard is continuously developed from the initial 2-phase power supply to 12-phase power supply, with the phase number changing with the working power of the CPU. In general, a 40W CPU needs a 2-phase or 3-phase VRM, while a 150W CPU needs a 6-phase VRM for performing the power control. However, in modern CPUs, their required working power varies with their property and market positioning. For example, if the CPU is positioned as low power consumption, then it may need just 40W for normal operation; but if the CPU is positioned as high performance, then its working power may increase to more than 150W for assurance of normal operation. Besides, the working power of a single CPU increases with the increase of the working frequency thereof. The most common case is that the user adjusts the single CPU to a higher working frequency, i.e. over clocking, so as to upgrade the CPU performance. Thus, the working power of the modern CPU varies in a rather large range.

To cope with the above situation, the modern motherboard is usually disposed with a VRM with a high phase number (e.g. 8-phase) such that the user can install various CPUs with various working powers or upgrade the performance by over clocking a single CPU. However, this approach brings more and more complicated circuit layouts of the motherboard, which accordingly increases the complexity and cost of the manufacturing process of the motherboard and at the same time largely increases the whole size of the motherboard since multiple groups of transistors, chokes and capacitors must be disposed on the motherboard.

### SUMMARY OF INVENTION

A motherboard with an additional voltage regulator module (VRM) slot is provided. The motherboard comprises: a central processing unit (CPU) slot for installing a CPU; a voltage regulator module, electrically connected to the CPU slot, for supplying the CPU installed in the CPU slot with a first power; a VRM slot area for installing a VRM card; and a control unit, electrically connected to the VRM slot area and electrically connected to the CPU slot in parallel with the voltage regulator module, for electrically conducting the VRM slot area with the CPU slot when the VRM card is installed into the VRM slot area, so as to make the VRM card and the voltage regulator module together supply the CPU installed in the CPU slot with a second power, wherein the second power is greater than the first power.

An electronic module with an additional voltage regulator module (VRM) slot is also provided. The electronic module comprises: a central processing unit (CPU); a VRM card; and a motherboard, which comprises: a CPU slot for installing the CPU; a voltage regulator module, electrically connected to the CPU slot, for supplying the CPU with a first power; a VRM slot area for installing the VRM card; and a control unit, electrically connected to the VRM slot area and electrically connected to the CPU slot in parallel with the voltage regulator module, for electrically conducting the VRM slot area with the CPU slot when the VRM card is installed into the VRM slot area, so as to make the VRM card and the voltage regulator module together supply the CPU installed in the CPU slot with a second power, wherein the second power is greater than the first power.

A motherboard with an additional voltage regulator module (VRM) slot is also provided. The motherboard comprises: a central processing unit (CPU) slot for selectively installing a first CPU or a second CPU; a voltage regulator module, electrically connected to the CPU slot, for supplying a first power required for operation of the first CPU installed in the CPU slot; a VRM slot area for installing a VRM card; and a control unit, electrically connected to the VRM slot area and electrically connected to the CPU slot in parallel with the voltage regulator module, for electrically conducting the VRM slot area with the CPU slot when the VRM card is installed into the VRM slot area, so as to make the VRM card and the voltage regulator module together supply a second power required for operation of the second CPU installed in the CPU slot, wherein the second power is greater than the first power.

An electronic module with an additional voltage regulator module (VRM) slot is also provided. The electronic module comprises: a first central processing unit (CPU); a second CPU, wherein a second power required for operation of the second CPU is greater than a first power required for operation of the first CPU; a VRM card; and a motherboard, which comprises: a CPU slot for selectively installing the first CPU or the second CPU; a voltage regulator module, electrically connected to the CPU slot, for supplying the first CPU with a first power when the first CPU is installed in the CPU slot; a VRM slot area for installing the VRM card; and a control unit, electrically connected to the VRM slot area and electrically connected to the CPU slot in parallel with the voltage regulator module, for electrically conducting the VRM slot area with the CPU slot when the second CPU is installed in the CPU slot and the VRM card is installed into the VRM slot area, so as to make the VRM card and the voltage regulator module together supply the second CPU with the second power.

### BRIEF DESCRIPTION OF THE DRAWINGS

Fig. 1 is a block diagram of an electronic module according to the first embodiment of the present invention.
Fig. 2 is a diagram showing the motherboard in Fig. 1.
Fig. 3 is a block diagram of an electronic module according to the second embodiment of the present invention.

### DETAILED DESCRIPTION

Reference will now to be made in detail to embodiments of the invention, which are illustrated in the accompanying drawings. Wherever possible, the same reference numbers will be used throughout the drawings to refer to the same or like parts.

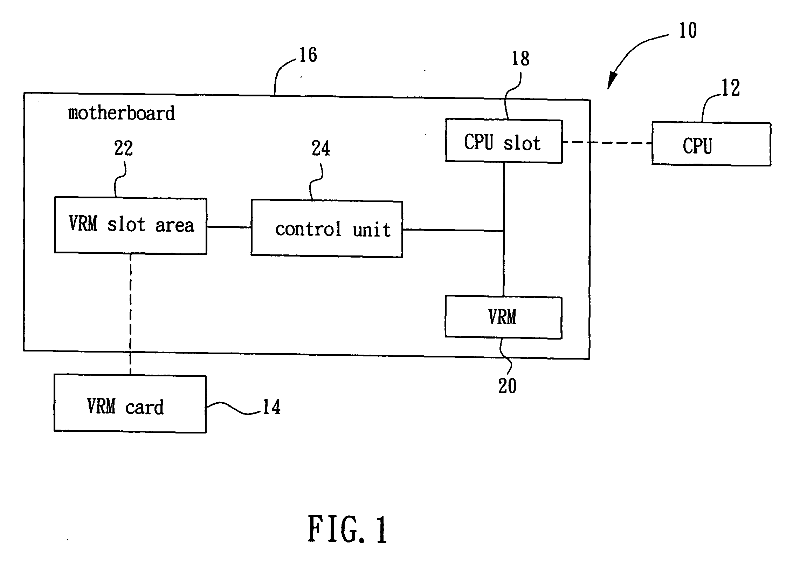

Fig. 1 is a block diagram of an electronic module 10 according to the first embodiment of the present invention. The electronic module 10 includes a central processing unit (CPU) 12, a voltage regulator module (VRM) card 14 and a motherboard 16. The motherboard 16 includes a CPU slot 18, a VRM 20, a VRM slot area 22 and a control unit 24. The CPU 12 is installed into the CPU slot 18. The VRM 20 is used to supply a first power (e.g. 40W) required for the operation of the CPU 12. The VRM card 14 can be inserted into the VRM slot area 22, which is implemented as a single VRM slot or multiple VRM slots. The control unit 24 is electrically connected to the VRM slot area 22 and electrically connected to the CPU slot 18 in parallel with the VRM 20. When the VRM card 14 is inserted into the VRM slot area 22, the control unit 24 electrically conducts the VRM slot area 22 with the CPU slot 18 so as to make the VRM card 14 and the VRM 20 supply the CPU 12 with a second power (e.g. 140W) together. The second power is greater than the first power, and the first and second powers are not limited to the above values. Besides, the VRM card 14 can be a 4-phase VRM card, and the VRM 20 can be a 2-phase VRM.

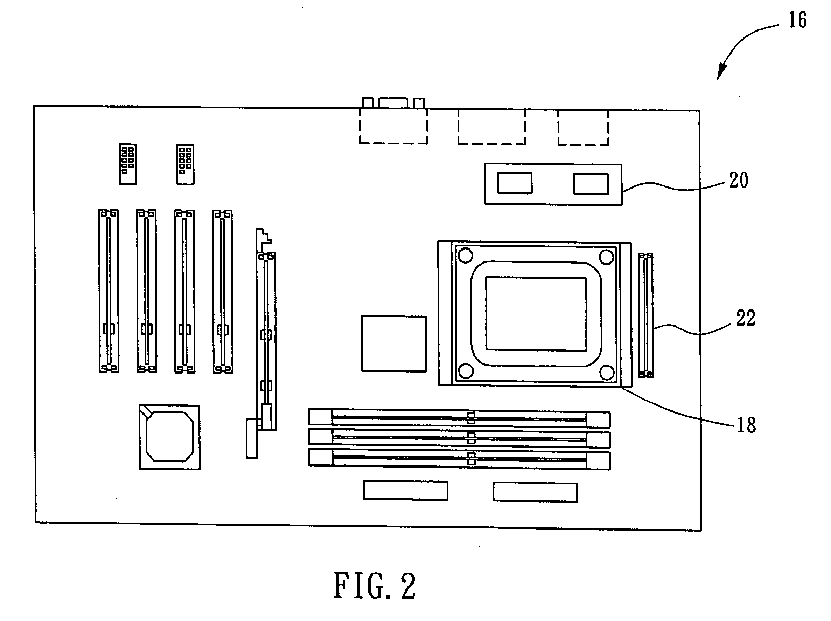

The operation of the electronic module 10 is explained in detail as follows. Please refer to Fig. 1 and Fig. 2. Fig. 2 is a diagram showing the motherboard 16 in Fig. 1. When a user installs the CPU 12 into the CPU slot 18, the VRM 20 will detect a VID signal from the CPU 12, search the predefined lookup table for the required voltage value corresponding to the VID signal, and then start to supply the CPU 12 with the required power, such as 40W. Since the VRM card 14 is not installed in the VRM slot area 22 at this time, the control unit 24 controls the VRM slot area 22 not to connect with the CPU slot 18. Next, if the user wants to over clock the CPU 12 to enhance the CPU performance, the power required for the operation of the CPU 12 increases accordingly. If the power required for the operation of the CPU 12 increases from 40W to 150W after the user over clocks the CPU, the VRM 20 cannot supply the CPU 12 with the power required for over clocking (150W) when the VRM 20 is a 2-phase VRM which can supply just 40W. In order to achieve the required power for over clocking, the user can insert the VRM card 14 into the VRM slot area 22. At the same time, the control unit 24 first controls the VRM card 14 to have the same working voltage as the VRM 20, so as to prevent the reverse bias from influencing the operation of the VRM card 14 or the VRM 20. Then, the control unit 24 electrically conducts the VRM slot area 22 with the CPU slot 18, and thus the VRM card 14 (e.g. 4-phase VRM card) and the VRM 20 (e.g. 2-phase VRM) can together supply the CPU 12 installed in the CPU slot 18 with the power required for over clocking (150W). The connection between the VRM card 14 and the VRM 20 can bring an effect equivalent to directly installing a 6-phase VRM onto the motherboard 16. That is, the combination of the VRM card 14 and the VRM 20 is substantially equivalent to the 6-phase VRM disposed on the motherboard 16. The power values required for the operation of the CPU 12 and the phase numbers of the VRM card 14 and the VRM 20 are not limited to those mentioned in the first embodiment. For example, the VRM card 14 can also be a 6-phase VRM card, that is, the phase number of the VRM card 14 can be properly selected in accordance with actual situations. In addition, the circuit layout of the electronic module 10 is common technique in the prior arts. For instance, the circuit disposition of the VRM or the parallel disposition of the VRM and the CPU are well known to those skilled in the art, and will not be described in detail here.

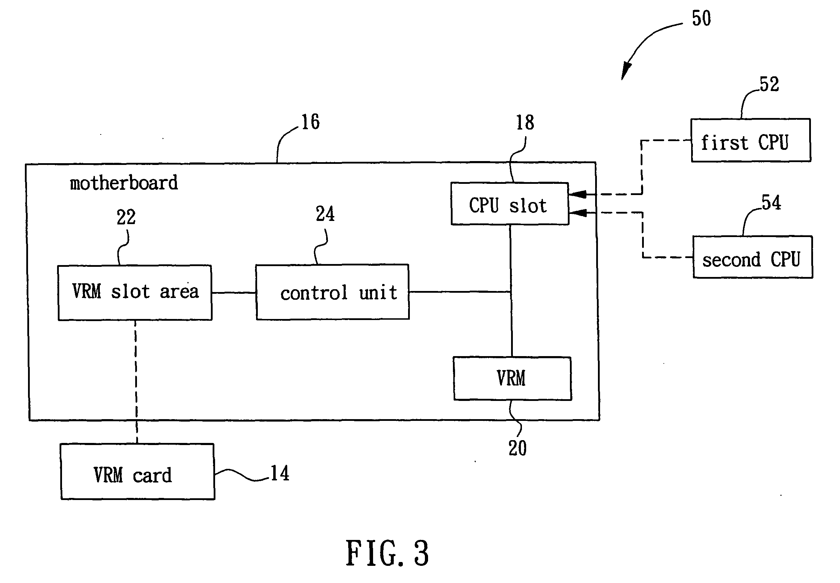

Fig. 3 is a block diagram of an electronic module 50 according to the second embodiment of the present invention. The electronic module 50 includes a first CPU 52, a second CPU 54, the VRM card 14 and the motherboard 16. The power required for the operation of the second CPU 54 (e.g. 150W) is greater than that required for the operation of the first CPU 52 (e.g. 40W). The motherboard 16 includes the CPU slot 18, the VRM 20, the VRM slot area 22 and the control unit 24. The CPU slot 18 is used for selectively installing the first CPU 52 or the second CPU 54. The VRM 20 is electrically connected to the CPU slot 18 and used for supplying the power required for the operation of the first CPU 52. The VRM slot area 22 is used for installing the VRM card 14. The control unit 24 is electrically connected to the VRM slot area 22 and electrically connected to the CPU slot 18 in parallel with the voltage regulator module 20. The control unit 24 electrically conducts the VRM slot area 22 with the CPU slot 18 when the second CPU 54 is installed in the CPU slot 18 and the VRM card 14 is installed into the VRM slot area 22, so as to make the VRM card 14 and the VRM 20 together supply the power required for the operation of the second CPU 54. Besides, the VRM card 14 can be a 4-phase VRM card, and the VRM 20 can be a 2-phase VRM.

The operation of the electronic module 50 is explained in detail as follows. Please refer to Fig. 2 and Fig. 3. When the user installs the first CPU 52 into the CPU slot 18, the VRM 20 will detect a VID signal from the first CPU 52, search the predefined lookup table for the required voltage value corresponding to the VID signal, and then start to supply the first CPU 52 with the required power, such as 40W. Since the VRM card 14 is not installed in the VRM slot area 22 at this time, the control unit 24 controls the VRM slot area 22 not to connect with the CPU slot 18. Next, if the user wants to replace the first CPU 52 with the second CPU 54 and if the required powers for the second CPU 54 and the first CPU 52 are 150W and 40W respectively, the VRM 20 cannot supply the required power (150W) for the second CPU 54 when the VRM 20 is a 2-phase VRM which can supply just 40W. In order to achieve the required power for the second CPU 54, the user can insert the VRM card 14 into the VRM slot area 22. At the same time, the control unit 24 first controls the VRM card 14 to have the same working voltage as the VRM 20, so as to prevent the reverse bias from influencing the operation of the VRM card 14 or the VRM 20. Then, the control unit 24 electrically conducts the VRM slot area 22 with the CPU slot 18, and thus the VRM card 14 (e.g. 4-phase VRM card) and the VRM 20 (e.g. 2-phase VRM) can together supply the second CPU 54 installed in the CPU slot 18 with the required power (150W). That is, even though the user replaces the first CPU 52 installed on the motherboard 16 with the second CPU 54, which requires a power exceeding that the VRM 20 can supply, the user can install the additional VRM card 14 into the VRM slot area 22 so as to make the second CPU 54 work normally. The power values required for the operation of the first CPU 52 and the second CPU 54 and the phase numbers of the VRM card 14 and the VRM 20 are not limited to those mentioned in the second embodiment. For example, the VRM 20 can also be a 4-phase VRM, that is, the phase number of the VRM 20 can be properly selected in accordance with actual situations. In addition, the circuit layout of the electronic module 50 is also common technique in the prior arts. For instance, the circuit disposition of the VRM or the parallel disposition of the VRM and the CPU are well known to those skilled in the art, and will not be described in detail here.

Instead of disposing a VRM having a high phase number onto the motherboard as the prior arts, the present invention disposes an additional VRM slot area on the motherboard so as to reduce the motherboard space required for the disposition of the VRM circuit. That is, even if the motherboard is only disposed with a VRM having a low phase number, the user can still upgrade the CPU performance, with the help of an additional VRM card installed in the VRM slot of the motherboard, by over clocking the original CPU or installing another higher grade CPU. Since disposed with a VRM having a low phase number, the motherboard provided by the present invention can lower the complexity and cost of the manufacturing process of the motherboard, and greatly reduce the whole size of the motherboard at the same time.

While the present invention has been shown and described with reference to the preferred embodiments thereof and the illustrative drawings, it should not be considered as limited thereby. Various possible modifications and alterations can be conceived by persons skilled without departing from the scope and the spirit of the present invention.

## Claims

1. A motherboard with an additional voltage regulator module (VRM) slot comprising:
a central processing unit (CPU) slot for installing a CPU;
a voltage regulator module, electrically connected to the CPU slot, for supplying the CPU installed in the CPU slot with a first power;
a VRM slot area for installing a VRM card; and
a control unit, electrically connected to the VRM slot area and electrically connected to the CPU slot in parallel with the voltage regulator module, for electrically conducting the VRM slot area with the CPU slot when the VRM card is installed into the VRM slot area, so as to make the VRM card and the voltage regulator module together supply the CPU installed in the CPU slot with a second power, wherein the second power is greater than the first power.

2. The motherboard of claim 1, wherein the voltage regulator module is a multi-phase voltage regulator module.

3. The motherboard of claim 1, wherein the control unit electrically conducts the VRM slot area with the CPU slot after controlling the VRM card to have a same working voltage as the voltage regulator module.

4. An electronic module with an additional voltage regulator module (VRM) slot comprising:
a central processing unit (CPU);
a VRM card; and
a motherboard, which comprises:
a CPU slot for installing the CPU;
a voltage regulator module, electrically connected to the CPU slot, for supplying the CPU with a first power;
a VRM slot area for installing the VRM card; and
a control unit, electrically connected to the VRM slot area and electrically connected to the CPU slot in parallel with the voltage regulator module, for electrically conducting the VRM slot area with the CPU slot when the VRM card is installed into the VRM slot area, so as to make the VRM card and the voltage regulator module together supply the CPU installed in the CPU slot with a second power, wherein the second power is greater than the first power.

5. The electronic module of claim 4, wherein the voltage regulator module is a multi-phase voltage regulator module, and the VRM card is a multi-phase VRM card.

6. The electronic module of claim 4, wherein the control unit electrically conducts the VRM slot area with the CPU slot after controlling the VRM card to have a same working voltage as the voltage regulator module.

7. A motherboard with an additional voltage regulator module (VRM) slot comprising:
a central processing unit (CPU) slot for selectively installing a first CPU or a second CPU;
a voltage regulator module, electrically connected to the CPU slot, for supplying a first power required for operation of the first CPU installed in the CPU slot;
a VRM slot area for installing a VRM card; and
a control unit, electrically connected to the VRM slot area and electrically connected to the CPU slot in parallel with the voltage regulator module, for electrically conducting the VRM slot area with the CPU slot when the VRM card is installed into the VRM slot area, so as to make the VRM card and the voltage regulator module together supply a second power required for operation of the second CPU installed in the CPU slot, wherein the second power is greater than the first power.

8. The motherboard of claim 7, wherein the voltage regulator module is a multi-phase voltage regulator module.

9. The motherboard of claim 7, wherein the control unit electrically conducts the VRM slot area with the CPU slot after controlling the VRM card to have a same working voltage as the voltage regulator module.

10. An electronic module with an additional voltage regulator module (VRM) slot comprising:
a first central processing unit (CPU);
a second CPU, wherein a second power required for operation of the second CPU is greater than a first power required for operation of the first CPU;
a VRM card; and
a motherboard, which comprises:
a CPU slot for selectively installing the first CPU or the second CPU;
a voltage regulator module, electrically connected to the CPU slot, for supplying the first CPU with a first power when the first CPU is installed in the CPU slot;
a VRM slot area for installing the VRM card; and
a control unit, electrically connected to the VRM slot area and electrically connected to the CPU slot in parallel with the voltage regulator module, for electrically conducting the VRM slot area with the CPU slot when the second CPU is installed in the CPU slot and the VRM card is installed into the VRM slot area, so as to make the VRM card and the voltage regulator module together supply the second CPU with the second power.

11. The electronic module of claim 10, wherein the voltage regulator module is a multi-phase voltage regulator module.

12. The electronic module of claim 10, wherein the control unit electrically conducts the VRM slot area with the CPU slot after controlling the VRM card to have a same working voltage as the voltage regulator module.
